# EUROPÄISCHE PATENTANMELDUNG

(11) **EP 2 428 351 A2**
(43) Veröffentlichungstag der Anmeldung: **14.03.2012**
(21) Anmeldenummer: 11180506.5
(22) Anmeldetag: 08.09.2011
(51) Int. Cl.: B29C 67/24

(54) **Verfahren und Vorrichtungen zur Herstellung von Formteilen und Granulat**

(30) Priorität: 09.09.2010 DE 102010037441
(71) Anmelder: Kreft, Siegfried, 99189 Elxleben (DE); Horn, Dietmar, 99092 Erfurt (DE)
(72) Erfinder: Kreft, Siegfried, 99189 Elxleben (DE); Horn, Dietmar, 99092 Erfurt (DE)
(74) Vertreter: Engel, Christoph Klaus

(57) **Zusammenfassung**

Die vorliegende Erfindung betrifft ein Verfahren zur Herstellung eines Formteiles, bei welchem Sand und Kunststoff verarbeitet werden. Im Weiteren betrifft die Erfindung ein Verfahren zur Herstellung eines Granulates zur Weiterverarbeitung zu einem Formteil sowie eine Vorrichtung zur Herstellung eines Formteiles oder eines Granulates zur Weiterverarbeitung zu einem Formteil. Bei dem erfindungsgemäßen Verfahren werden zunächst Sand und Kunststoff bereitgestellt. Der Sand wird in einer den Sand umwälzenden Vorrichtung (04) erwärmt. Ein Teil des erwärmten Sandes und ein Teil des Kunststoffes werden in eine Mischeinrichtung (09, 13, 16) gefüllt, in welcher der Sand und der zum Schmelzen gebrachte Kunststoff zu einer Formenmasse vermischt werden. In einem weiteren Schritt des Verfahrens wird ein Teil der Formenmasse aus der Mischeinrichtung (09, 13, 16) in eine Formeinrichtung ausgegeben. Parallel dazu werden ein weiterer Teil des bereitgestellten erwärmten Sandes und ein weiterer Teil des bereitgestellten Kunststoffes in die Mischeinrichtung (09, 13, 16) gefüllt. Die Formenmasse kühlt in der Formeinrichtung ab, wodurch sie erstarrt, um ein Formteil auszubilden, welches anschließend zu entnehmen ist.

## Beschreibung

Die vorliegende Erfindung betrifft ein Verfahren zur Herstellung eines Formteiles, bei welchem Sand und Kunststoff verarbeitet werden. Im Weiteren betrifft die Erfindung ein Verfahren zur Herstellung eines Granulates zur Weiterverarbeitung zu einem Formteil, wobei wiederum Sand und Kunststoff in gleicher Weise verarbeitet werden. Ein weiterer Gegenstand der Erfindung ist durch eine Vorrichtung zur Herstellung eines Formteiles oder eines Granulates zur Weiterverarbeitung zu einem Formteil gegeben.

Die EP 1 299 321 B1 zeigt ein Verfahren zur Herstellung eines Werkstoffes, bei welchem Sand auf eine Temperatur zwischen 300 °C und 800 °C erwärmt wird. Der erwärmte Sand und ein Polymer werden in einem Mischkessel vermischt, um ein heißes Schmelzgemisch zu erzeugen. Das Schmelzgemisch wird in eine Pressform eingebracht, wo es unter Druck abkühlt und zu einem Werkstück erstarrt.

Aus der WO 93/08974 A1 ist ein Verfahren zur Herstellung von Formteilen aus einem thermoplastischen Material bekannt, bei welchem das thermoplastische Material geschmolzen und mit einem Füllstoff vermischt wird. Der Füllstoff kann beispielsweise durch Sand oder Flugasche gebildet sein. Das Vermischen erfolgt in einem rotierenden Mischkessel. Die vermischten Materialien können mithilfe eines Schneckenextruders ausgegeben werden.

Die WO 94/27800 A1 zeigt ein Verfahren zur Herstellung eines Baumaterials aus einer Mischung aus thermoplastischen Abfällen und Mineralien. Die Mineralien sind bevorzugt fein gemahlen und weisen einen durchschnittlichen Durchmesser zwischen 3 mm und 4 mm auf. Die Mineralien werden auf eine Temperatur zwischen 160° und 220°C erwärmt und mit dem thermoplastischen Material vermischt.

In der WO 02/090 288 A1 ist eine Materialmischung aus Kunststoff und verschiedenen Partikeln beschrieben. Dabei werden feste Partikel und Kunststoff als Bindemittel getrennt erwärmt, dann vermischt und als Formmasse ausgegeben. Die Partikel bestehen aus Zuschlagstoffen, Sand und Füllstoffen. Aufgrund der nicht homogenen Erwärmung des Sands kann es allerdings in der Mischung zu deutlichen Temperaturunterschieden kommen, welche die Eigenschaften des Endproduktes stark negativ beeinflussen.

Die DE 10 2007 008 149 A1 beschreibt die thermische Regenerierung von Gießereisand, die u.a. durch Erwärmung beispielsweise in einem Drehrohrofen erreicht wird. Die Herstellung einer Materialmischung lehrt diese Druckschrift nicht.

Die EP 2 087 979 A1 zeigt eine Vorrichtung zum Mischen von granulösem Inertmaterial und Harzbindemittel bei der Fertigung von aus Verbundwerkstoff hergestellten laminierten Artikeln.

Die Aufgabe der vorliegenden Erfindung besteht ausgehend vom Stand der Technik darin, die Herstellung von Formteilen auf der Basis von Sand und Kunststoff derart zu verbessern, dass eine große Menge an Formteilen aufwandsarm produziert werden kann.

Die genannte Aufgabe wird durch ein Verfahren zur Herstellung eines Formteiles gemäß dem beigefügten Anspruch 1 gelöst. Weiterhin wird die Aufgabe durch ein Verfahren zur Herstellung eines Granulates gemäß dem beigefügten nebengeordneten Anspruch 2 und durch ein Verfahren zur Herstellung eines Formteiles gemäß dem beigefügten Anspruch 7 gelöst. Die Lösung der genannten Aufgabe gelingt weiterhin durch eine Vorrichtung zur Herstellung eines Formteiles oder zur Herstellung eines Granulates gemäß dem beigefügten nebengeordneten Anspruch 8.

Das erfindungsgemäße Verfahren dient der Herstellung eines Formteiles, welches beispielsweise als Bauteil im Hoch- oder Tiefbau verwendet werden kann. Bei diesem Verfahren wird zunächst Sand bereitgestellt, bei welchem es sich um Sedimente oder Sedimentgesteine handelt, die beispielsweise in Form von Körnern vorliegen, welche im Durchmesser bevorzugt zwischen 0,005 mm und 5 mm groß sind. Es kann sich aber auch um einen besonders hergestellten Sand handeln, wie beispielsweise grobkristalliner Marmor, Marmorkalksteine, Dolomiten, grobkristalliner Granit, Syeniten, Ziegel, Dachziegel, Tuffen, Anthrazit, Tonohren, Porzellan, Glas, Basalt, Quarzit, Bimssteine, Schlacken, Perlite, Vermikulite. Weiterhin wird ein Kunststoff bereitgestellt, bei welchem es sich bevorzugt um Thermoplast, wie Polyolefin, Polyethylen, Polypropylen handelt. Der Kunststoff kann in unterschiedlichsten Formen bereitgestellt werden, z. B. als Granulat oder auch in beliebigen Ausprägungen, beispielsweise als Abfall.

In einem nächsten Schritt des erfindungsgemäßen Verfahrens wird der Sand in einer den Sand umwälzenden Vorrichtung erwärmt. Während dieses Erwärmvorganges wird der Sand durch das Umwälzen vermischt, sodass eine homogene Erwärmung des Sandes gewährleistet ist. Der Sand wird während des Erwärmens bevorzugt permanent umgewälzt, sodass eine äußerst gleichmäßige Erwärmung sichergestellt ist. In einem weiteren Schritt des erfindungsgemäßen Verfahrens werden ein Teil des erwärmten Sandes und ein Teil des Kunststoffes in eine Mischeinrichtung gefüllt. Dieses Füllen erfolgt bevorzugt im Rahmen eines Förderns des erwärmten Sandes und des Kunststoffes, sodass das Füllen des Teiles des erwärmten Sandes und des Teiles des erwärmten Kunststoffes in einem kontinuierlichen Vorgang erfolgen kann. Der Kunststoff wird spätestens in der Mischeinrichtung zum Schmelzen bzw. zumindest in einen thermoplastischen Zustand gebracht. Dies erfolgt teilweise oder vollständig durch diejenige Wärme, welche vom erwärmten Sand an den Kunststoff abgegeben wird. Der erwärmte Sand und der zum Schmelzen gebrachte Kunststoff werden in der Mischeinrichtung vermischt, um eine Formenmasse auszubilden, welche in diesem Schritt des erfindungsgemäßen Verfahrens verformbare Eigenschaften aufweist. Das Vermischen des erwärmten Sandes und des zum Schmelzen gebrachten Kunststoffes in der Mischeinrichtung erfolgt bevorzugt kontinuierlich, insbesondere dann, wenn die Mischeinrichtung kontinuierlich befüllt wird.

In einem weiteren Schritt des erfindungsgemäßen Verfahrens wird ein Teil der Formenmasse aus der Mischeinrichtung in eine Formeinrichtung ausgegeben. Parallel dazu werden ein weiterer Teil des bereitgestellten erwärmten Sandes und ein weiterer Teil des bereitgestellten Kunststoffes in die Mischeinrichtung gefüllt, was bevorzugt gleichzeitig zu der Ausgabe in die Formeinrichtung erfolgt. Der in die Mischeinrichtung gefüllte weitere Teil des bereitgestellten Sandes und der weitere Teil des bereitgestellten Kunststoffes werden in der Mischeinrichtung vermischt, bevorzugt im Rahmen eines kontinuierlichen Vorganges. Bevorzugt gleicht derjenige Teil der Formenmasse, welcher aus der Mischeinrichtung ausgegeben wird, der Summe des weiteren Teiles des bereitgestellten erwärmten Sandes und des weiteren Teiles des bereitgestellten Kunststoffes, welche in die Mischeinrichtung gefüllt wird.

In einem weiteren Schritt des erfindungsgemäßen Verfahrens kühlt die in der Formeinrichtung befindliche Formenmasse ab, wodurch sie erstarrt, um ein Formteil auszubilden. Schließlich ist das ausgebildete Formteil aus der Formeinrichtung zu entnehmen.

Ein besonderer Vorteil des erfindungsgemäßen Verfahrens besteht darin, dass es quasikontinuierlich oder kontinuierlich durchgeführt werden kann, wodurch eine große Menge an Formteilen, z. B. 4 Tonnen Formteile je Stunde, hergestellt werden kann. Es können große Mengen an Sand und Kunststoff verarbeitet werden, da das Verfahren eine unterbrechungsfreie Verarbeitung der als Schüttgut o. ä. zur Verfügung stehenden Ausgangsstoffe ermöglicht.

Das erfindungsgemäße Verfahren zur Herstellung eines Granulates stellt eine weitere Ausgestaltung der Erfindung dar, bei welcher das Granulat hergestellt wird, um es in einem anschließenden Schritt zur Herstellung eines Formteiles zu verwenden. Der anschließende Schritt zur Herstellung des Formteiles kann zeitlich und örtlich versetzt erfolgen. Das Verfahren zur Herstellung eines Granulates umfasst in gleicher Weise wie das Verfahren zur Herstellung eines Formteiles Schritte zum Bereitstellen von Sand, zum Bereitstellen von Kunststoff, zum Erwärmen des Sandes in einer den Sand umwälzenden Vorrichtung und zum Füllen eines Teiles des erwärmten Sandes und eines Teiles des Kunststoffes in eine Mischeinrichtung. Ebenfalls in gleicher Weise werden der erwärmte Sand und der zum Schmelzen gebrachte Kunststoff in der Mischeinrichtung zu einer Formenmasse vermischt. Weiterhin wird ein Teil der Formenmasse aus der Mischeinrichtung in eine Formeinrichtung ausgegeben, wobei ein weiterer Teil des bereitgestellten erwärmten Sandes und ein weiterer Teil des bereitgestellten Kunststoffes in die Mischeinrichtung gefüllt werden, um diese zu vermischen. Insoweit gleicht dieser Schritt dem entsprechenden Schritt des Verfahrens zur Herstellung eines Formteils, wobei jedoch die Formeinrichtung dafür vorgesehen ist, die Formenmasse zu einem granulierbaren Zwischenformteil zu formen, beispielsweise zu einem Zwischenformteil in Form eines oder mehrerer dünner Stränge. Beim Formen der Formenmasse in der Formeinrichtung kühlt die Formenmasse zumindest teilweise ab, wodurch sie zumindest teilweise erstarrt. Beispielsweise kann die Formenmasse bis zu einer Temperatur abkühlen, bei welcher sich die Formenmasse nahe einem Übergang vom festen zum flüssigen Aggregatszustand befindet. Auch kann die Formenmasse bevorzugt bis zu einer Temperatur abkühlen, bei welcher sie gerade noch in einem festen Aggregatszustand vorliegt, jedoch von weicher Konsistenz ist. Die weiche Konsistenz erleichtert das anschließende Granulieren des Zwischenformteils zu einem Granulat. Das Granulieren kann beispielsweise durch ein Zerhäckseln der die Zwischenformteile bildenden Stränge erfolgen. Das Granulat kann anschließend vollständig abkühlen, um zu einem späteren Zeitpunkt für die Herstellung eines Formteiles verwendet zu werden.

Die nachfolgenden Erläuterungen beschreiben bevorzugte Ausführungsformen beider oben beschriebener erfindungsgemäßer Verfahren.

Der Sand wird in der den Sand umwälzenden Vorrichtung bevorzugt dermaßen erwärmt, dass die Wärme des erwärmten Sandes zum Schmelzen des Kunststoffes in der Mischeinrichtung führt. Folglich ist keine weitere Erwärmung des Kunststoffes, beispielsweise vor dem Einfüllen in die Mischeinrichtung erforderlich. Das Vermischen des erwärmten Sanden und des Kunststoffes in der Mischeinrichtung gewährleistet, dass die Wärme des Sandes gleichmäßig an alle Bereiche des Kunststoffes weitergeleitet wird, sodass der Kunststoff vollständig zum Schmelzen gebracht wird. Bei dieser Ausführungsform der erfindungsgemäßen Verfahren ist die Temperatur des erwärmten Sandes höher als die Schmelztemperatur des Kunststoffes.

Der erwärmte Sand und der Kunststoff passieren die Mischeinrichtung bevorzugt in einem Durchlaufbetrieb vom Füllen in die Mischeinrichtung bis zur Ausgabe aus der Mischeinrichtung. Dieser Durchlaufbetrieb gewährleistet einen kontinuierlichen Ablauf des Vermischens des erwärmten Sandes und des zum Schmelzen gebrachten Kunststoffes, sodass auch die Schritte des Erwärmens des Sandes und des Füllens eines Teiles dieses Sandes und eines Teiles des Kunststoffes in die Mischeinrichtung kontinuierlich ablaufen können.

Der Kunststoff wird bevorzugt als Kunststoffgranulat oder in einem zermahlten Zustand bereitgestellt, wodurch gewährleistet ist, dass der Kunststoff in der Mischeinrichtung durch den erwärmten Sand in kurzer Zeit zum Schmelzen gebracht wird.

Der Sand passiert bei der Erwärmung die den Sand umwälzende Vorrichtung bevorzugt in einem Durchlaufbetrieb von der Bereitstellung des Sandes bis zum Füllen eines Teils des erwärmten Sandes in die Mischeinrichtung. Der Durchlaufbetrieb ermöglicht die Erwärmung von Sand, welcher kontinuierlich bereitgestellt wird. Hierfür eignet sich besonders ein Drehrohrofen, welcher den Sand zum einen umwälzt und zum anderen erwärmt. Der Drehrohrofen wird bevorzugt gasbefeuert, wodurch der Sand in kurzer Zeit auf hohe Temperaturen gebracht werden kann. Der Sand wird dabei der Flamme des Gases ausgesetzt.

Der Sand wird bevorzugt bis zu einer Temperatur zwischen 150° und 350°C, besonders bevorzugt zwischen 200°C und 300°C erwärmt. Die vergleichsweise niedrige Temperatur wird dadurch ermöglicht, dass der erwärmte Sand seine Wärme beim Vermischen in der Mischeinrichtung gleichmäßig an alle einzelnen Elemente des Kunststoffes abgibt.

Der in der Mischeinrichtung befindliche Sand und der in der Mischeinrichtung befindliche Kunststoff werden bevorzugt erwärmt, um ein Erstarren des geschmolzenen Kunststoffes in der Mischeinrichtung zu verhindern. Dieses Erwärmen erfolgt bevorzugt nur insoweit, als dass die Temperatur der Mischung aus dem Sand und dem Kunststoff nicht sinkt.

Bei der Ausgabe eines Teiles der Formenmasse aus der Mischeinrichtung in die Formeinrichtung wird bevorzugt ein gleichgroßer Teil des bereitgestellten erwärmten Sandes und des bereitgestellten Kunststoffes in die Mischeinrichtung gefüllt, um einen gleichmäßig kontinuierlichen Ablauf des Verfahrens zu gewährleisten. Die Teile gleichen sich dann, wenn die Masse des ausgegebenen Teils der Formenmasse gleich der Summe der Massen der in die Mischeinrichtung gefüllten Teile des bereitgestellten erwärmten Sandes und des bereitgestellten Kunststoffes ist.

Der Sand wird bevorzugt kontinuierlich in die den Sand umwälzende Vorrichtung gefüllt, um den Sand dort zu erwärmen. In gleicher Weise werden der erwärmte Sand und der Kunststoff bevorzugt kontinuierlich in die Mischeinrichtung gefüllt. Hierdurch kann ein vollständig kontinuierlicher Ablauf des Verfahrens gewährleistet werden.

Das Vermischen der erwärmten Sandes und des zum Schmelzen gebrachten Kunststoffes in der Mischeinrichtung erfolgt bevorzugt in mehreren Stufen einer Durchlaufmischung, wobei mit jeder Stufe der Durchlaufmischung das Vermischen intensiviert wird. Die mehrstufige Durchmischung gewährleistet einen hohen Grad der Vermischung des erwärmten Sandes und des zum Schmelzen gebrachten Kunststoffes, wodurch eine hohe Festigkeit des resultierenden Formkörpers bzw. Granulates gewährleistet werden kann.

Bei einer weiteren bevorzugten Ausführungsform werden zusätzlich Glasfasern bereitgestellt, welche gemeinsam mit dem erwärmten Sand und dem Kunststoff in die Mischeinrichtung gefüllt werden, um in der Mischeinrichtung mit dem Kunststoff und mit dem Sand vermischt zu werden. Die Glasfasern führen zu einer erhöhten Elastizität und Belastbarkeit des resultierenden Formteiles.

Bei einer weiteren bevorzugten Ausführungsform wird weiterhin ein Farbstoff bereitgestellt, welcher gemeinsam mit dem erwärmten Sand und dem Kunststoff in die Mischeinrichtung gefüllt wird, wodurch das herzustellende Formteil bzw. Granulat farbige Eigenschaften erhält.

Die Formeinrichtung ist bevorzugt durch eine Hohlform gebildet, in welche die Formenmasse eingefüllt wird. Das Abkühlen und das Erstarren der in der Formeinrichtung befindlichen Formenmasse erfolgt bevorzugt bei einem Überdruck zwischen 1 kPa und 40 kPa, wodurch die Formenmasse komprimiert wird und der auszubildende Formkörper eine hohe Festigkeit erhält.

Der Sand weist bevorzugt eine Korngröße zwischen 0,5 mm und 0,9 mm auf. Jedoch können in Abhängigkeit von den zu erzielenden Eigenschaften auch andere Korngrößen gewählt werden.

In der Mischeinrichtung können während des Vermischens des erwärmten Sandes und des zum Schmelzen gebrachten Kunststoffes Gase entstehen, welche bevorzugt abgesaugt werden. Alternativ oder ergänzend werden bevorzugt Inertgase in die Mischeinrichtung eingeleitet, wodurch ein Verbrennen des Kunststoffes oder auch andere Reaktionen verhindert werden.

Der Sand wird bevorzugt mit einem Anteil von mindestens 50 % in die Mischeinrichtung gefüllt, während der Kunststoff mit einem Anteil von mindestens 15 % in die Mischeinrichtung gefüllt wird. Diese Anteile des Sandes und des Kunststoffes führen zu Eigenschaften der Formenmasse, welche sie zur Ausbildung von Formkörpern für unterschiedlichste Anwendungen prädestinieren.

Eine weitere Ausgestaltung der Erfindung ist durch ein Verfahren zur Herstellung eines Formteiles gegeben, welches sich an das erfindungsgemäße Verfahren zur Herstellung eines Granulates anschließt. In einem der weiteren Schritte wird das Granulat erwärmt, woraufhin es in eine Form eingefüllt wird. Alternativ kann das Granulat auch innerhalb der Form erwärmt werden. In einem weiteren Schritt kühlt das in der Form befindliche Granulat ab, um zu erstarren und ein Formteil auszubilden. Das ausgebildete Formteil ist anschließend aus der Form zu entnehmen.

Das Granulat wird bevorzugt dermaßen erwärmt, dass der enthaltene Kunststoff geschmolzen ist. Hierfür wird das Granulat bevorzugt bis zu einer Temperatur zwischen 150° und 200°C erwärmt.

Das erwärmte Granulat wird bevorzugt mit einem Überdruck zwischen 1 kPa und 40 kPa in die Form gepresst.

Die erfindungsgemäße Vorrichtung dient zur Herstellung eines Formteils und/oder zur Herstellung eines Granulates für die spätere Herstellung eines Formteiles. Die Vorrichtung umfasst zunächst ein steuerbares Mittel zum Bereitstellen von Sand und ein steuerbares Mittel zum Bereitstellen von Kunststoff. Die Vorrichtung umfasst weiterhin eine Einrichtung zum Erwärmen des Sandes bei gleichzeitiger Umwälzung des Sandes. Die Einrichtung zum Erwärmen des Sandes ist bevorzugt durch einen Drehrohrofen gebildet. Die erfindungsgemäße Vorrichtung umfasst weiterhin eine Mischeinrichtung zum Vermischen des erwärmten Sandes und des geschmolzenen Kunststoffes zu einer Formenmasse. Die Mischeinrichtung ist bevorzugt durch ein oder durch mehrere Durchlaufmischer gebildet, mit welchen große Mengen an Sand und Kunststoff vermischt werden können. Die erfindungsgemäße Vorrichtung umfasst weiterhin eine Formeinrichtung zum Formen eines aus der Mischeinrichtung entnommenen Teiles der Formenmasse. Die Formeinrichtung kann beispielsweise durch eine Hohlform gebildet sein, welche bevorzugt mit einem Druck beaufschlagbar ist. Die Formeinrichtung kann aber auch beispielsweise durch eine Strangpresse gebildet sein, um einen dünnen Strang zu formen. Im Weiteren umfasst die erfindungsgemäße Vorrichtung eine Steuereinrichtung zum Steuern des Mittels zum Bereitstellen des Sandes und zum Steuern des Mittels zum Bereitstellen des Kunststoffes. Die Steuereinrichtung ist dazu konfiguriert, einen weiteren Teil des bereitgestellten erwärmten Sandes und einen weiteren Teil des bereitgestellten Kunststoffes durch die Mittel zum Bereitstellen des Sandes und des Kunststoffes in die Mischeinrichtung füllen zu lassen, nachdem der Teil der Formenmasse in die Formeinrichtung entnommen wurde. Die Steuereinrichtung erlaubt einen quasikontinuierlichen oder kontinuierlichen Betrieb der erfindungsgemäßen Vorrichtung.

Das steuerbare Mittel zum Bereitstellen von Sand ist bevorzugt durch mindestens ein Silo mit einer daran angeschlossenen Fördereinrichtung gebildet. In gleicher Weise ist das steuerbare Mittel zum Bereitstellen von Kunststoff bevorzugt durch mindestens ein Silo mit einer daran angeschlossenen Fördereinrichtung gebildet. Die Silos mit den daran angeschlossenen Fördereinrichtungen ermöglichen eine kontinuierliche Bereitstellung des Sandes und des Kunststoffes, sodass die Steuereinrichtung, welche insbesondere die Fördereinrichtungen steuert, ein kontinuierliches Füllen der Mischeinrichtung gewährleisten kann.

Weitere Vorteile, Einzelheiten und Weiterbildungen der Erfindung ergeben sich aus der nachfolgenden Beschreibung einer bevorzugten Ausführungsform der erfindungsgemäßen Vorrichtung, unter Bezugnahme auf die Zeichnung.

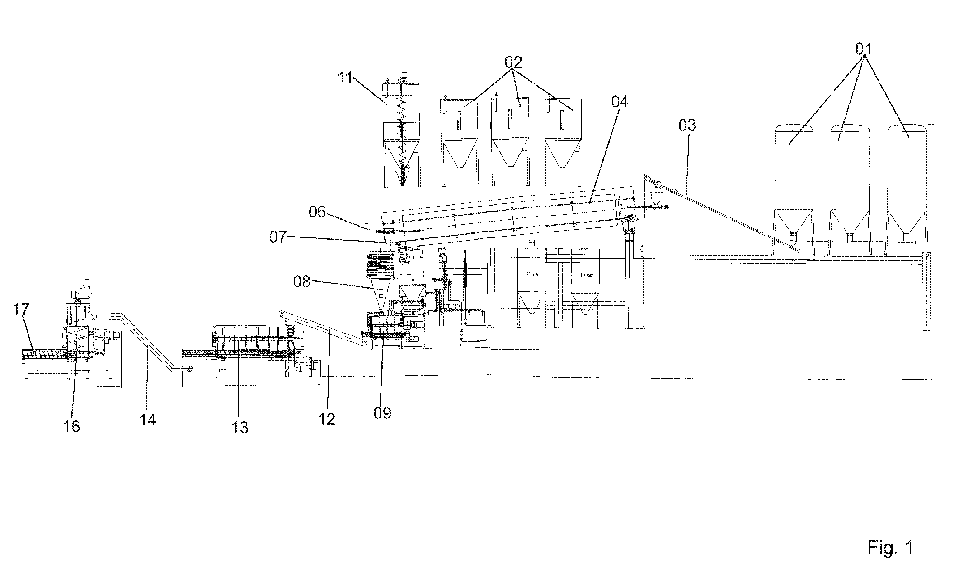

Die einzige Fig. 1 zeigt eine bevorzugte Ausführungsform einer erfindungsgemäßen Vorrichtung zur Herstellung eines Formteiles, die als eine Großanlage ausgeführt ist. Die Großanlage umfasst zunächst mehrere Silos 01, in welchen Sand (nicht gezeigt) bevorratet ist. Die Großanlage umfasst weiterhin mehrere Silos 02, in denen Kunststoff in Form von Kunststoffgranulat (nicht gezeigt) bevorratet ist. Der in den Silos 01 bevorratete Sand wird mithilfe eines Sandförderers 03 zu einem Drehrohrofen 04 gefördert. Der Sandförderer 03 umfasst eine Spirale mit einer Förderleistung von 60 kg/min. Der Drehrohrofen 04 wird mithilfe eines Gasbrenners 06 beheizt. Der mit dem Sandförderer 03 aus den Silos 01 in den Drehrohrofen 04 beförderte Sand passiert den Drehrohrofen 04 in einem Durchlaufbetrieb, da sich der drehende Drehrohrofen 04 in einem geneigten Zustand befindet, sodass der im Drehrohrofen 04 umgewälzte Sand sich während der Erhitzung durch den Brenner 06 zu einer Öffnung 07 bewegt. Der Sand wird in dem Drehrohrofen 04 bis zu einer Temperatur von 250 °C erwärmt. Die Durchlaufmenge des Sandes beträgt bei der gezeigten Großanlage 3,5 t/h. Der aus der Öffnung 07 des Drehrohrofens 04 austretende Sand gelangt in einen Zwischenbunker 08, mithilfe dessen eine bestimmbare Menge des Sandes in einen ersten Durchlaufmischer 09 ausgebbar ist. Weiterhin ist mithilfe eines Mischsilos 11 eine bestimmbare Menge des in den Silos 02 bevorrateten Kunststoffgranulates in den ersten Durchlaufmischer 09 einfüllbar. Im ersten Durchlaufmischer 09 werden der eingefüllte Sand und das eingefüllte Kunststoffgranulat vermischt, wodurch die Wärme des erwärmten Sandes zum Schmelzen des Kunststoffes führt. Um einen höheren Grad der Durchmischung des Sandes und des schmelzenden Kunststoffgranulates zu erzielen, wird das im ersten Durchlaufmischer 09 erzeugte Gemisch über ein erstes Förderband 12 zu einem zweiten Durchlaufmischer 13 befördert, in welchem das Gemisch aus dem Sand und dem geschmolzenen Kunststoff weitergehend vermischt wird. Schließlich wird das im zweiten Durchlaufmischer 13 weitervermischte Gemisch über ein zweites Förderband 14 zu einem dritten Durchlaufmischer 16 befördert, in welchem das Gemisch nochmals intensiv vermischt wird. Das im dritten Durchlaufmischer 16 behandelte Gemisch stellt nunmehr eine Formenmasse dar, welche mit einem Schraubenförderer 17 in der Menge steuerbar zu einer Formeinrichtung (nicht gezeigt) befördert wird, wo sie geformt wird, woraufhin sie abkühlt und zu einem Formteil erstarrt.

### Bezugszeichenliste

- 01: Silo (Sand)
- 02: Silo (Kunststoffgranulat)
- 03: Sandförderer
- 04: Drehrohrofen
- 05: -
- 06: Gasbrenner
- 07: Öffnung
- 08: Zwischenbunker
- 09: Durchlaufmischer
- 10: -
- 11: Mischsilo
- 12: erstes Förderband
- 13: zweiter Durchlaufmischer
- 14: zweites Förderband
- 15: -
- 16: dritter Durchlaufmischer
- 17: Schraubenförderer

## Patentansprüche

1. Verfahren zur Herstellung eines Formteiles, folgende Schritte umfassend:
- Bereitstellen von Sand;
- Bereitstellen von Kunststoff;
- Erwärmen des Sandes in einer den Sand umwälzenden Vorrichtung (04);
- Füllen eines Teiles des erwärmten Sandes und eines Teiles des Kunststoffes in eine Mischeinrichtung (09, 13, 16);
- Vermischen des erwärmten Sandes und des zum Schmelzen gebrachten Kunststoffes in der Mischeinrichtung (09, 13, 16) zu einer Formenmasse;
- Ausgabe eines Teiles der Formenmasse aus der Mischeinrichtung (09, 13, 16) in eine Formeinrichtung, wobei ein weiterer Teil des bereitgestellten erwärmten Sandes und ein weiterer Teil des bereitgestellten Kunststoffes in die Mischeinrichtung (09, 13, 16) gefüllt werden, um diese zu vermischen;
- Abkühlen und Erstarren der in der Formeinrichtung befindlichen Formenmasse, um ein Formteil auszubilden; und
- Entnahme des Formteiles aus der Formeinrichtung.

2. Verfahren zur Herstellung eines Granulates für die Weiterverarbeitung zu einem Formteil, folgende Schritte umfassend:
- Bereitstellen von Sand;
- Bereitstellen von Kunststoff;
- Erwärmen des Sandes in einer den Sand umwälzenden Vorrichtung (04);
- Füllen eines Teiles des erwärmten Sandes und eines Teiles des Kunststoffes in eine Mischeinrichtung (09, 13, 16);
- Vermischen des erwärmten Sandes und des zum Schmelzen gebrachten Kunststoffes in der Mischeinrichtung (09, 13, 16) zu einer Formenmasse;
- Ausgabe eines Teiles der Formenmasse aus der Mischeinrichtung (09, 13, 16) in eine Formeinrichtung, wobei ein weiterer Teil des bereitgestellten erwärmten Sandes und ein weiterer Teil des bereitgestellten Kunststoffes in die Mischeinrichtung (09, 13, 16) gefüllt werden, um diese zu vermischen;
- Formen der Formenmasse in der Formeinrichtung, wobei die Formenmasse zumindest teilweise abkühlt und teilweise erstarrt, um ein granulierbares Zwischenformteil auszubilden; und
- Granulieren des Zwischenformteiles zu einem Granulat.

3. Verfahren nach Anspruch 1 oder 2, **dadurch gekennzeichnet, dass** der erwärmte Sand und der Kunststoff die Mischeinrichtung (09, 13, 16) in einem Durchlaufbetrieb vom Füllen in die Mischeinrichtung (09, 13, 16) bis zur Ausgabe aus der Mischeinrichtung (09, 13, 16) passieren.

4. Verfahren nach einem der Ansprüche 1 bis 3, **dadurch gekennzeichnet, dass** der Sand bei der Erwärmung die den Sand umwälzende Vorrichtung (04) in einem Durchlaufbetrieb von der Bereitstellung des Sandes bis zum Füllen eines Teiles des erwärmten Sandes in die Mischeinrichtung (09, 13, 16) durchläuft.

5. Verfahren nach einem der Ansprüche 1 bis 4, **dadurch gekennzeichnet, dass** der Sand auf eine Temperatur zwischen 200°C und 300°C erwärmt wird.

6. Verfahren nach einem der Ansprüche 1 bis 5, **dadurch gekennzeichnet, dass** weiterhin Glasfasern bereitgestellt werden, welche gemeinsam mit dem erwärmten Sand und dem Kunststoff in die Mischeinrichtung (09, 13, 16) gefüllt werden, um in der Mischeinrichtung (09, 13, 16) mit dem Kunststoff und dem Sand vermischt zu werden.

7. Verfahren zur Herstellung eines Formteiles, umfassend die Schritte eines Verfahrens nach Anspruch 2 oder einem auf diesen rückbezogenen Anspruch, weiterhin folgende Schritte umfassend:
- Erwärmen des Granulates;
- Einfüllen des erwärmten Granulates in eine Form;
- Abkühlen und Erstarren des in der Form befindlichen Granulates, um ein Formteil auszubilden; und
- Entnahme des Formteiles aus der Form.

8. Vorrichtung zur Herstellung eines Formteiles oder eines Granulates zur Weiterverarbeitung zu einem Formteil, umfassend:
- ein Mittel (01, 03) zum Bereitstellen von Sand;
- ein Mittel (02, 11) zum Bereitstellen von Kunststoff;
- eine Einrichtung (04, 06) zum Erwärmen des Sandes bei gleichzeitiger Umwälzung des Sandes;
- eine Mischeinrichtung (09, 13, 16) zum Vermischen des erwärmten Sandes und des geschmolzenen Kunststoffes zu einer Formenmasse;
- eine Formeinrichtung zum Formen eines aus der Mischeinrichtung (09, 13, 16) entnommenen Teiles der Formenmasse;
- eine Steuereinrichtung zum Steuern des Mittels (01, 03) zum Bereitstellen des Sandes und des Mittels (02, 11) zum Bereitstellen des Kunststoffes, welche dazu konfiguriert ist, einen weiteren Teil des bereitgestellten erwärmten Sandes und einen weiteren Teil des bereitgestellten Kunststoffes in die Mischeinrichtung (09, 13, 16) füllen zu lassen, nachdem der Teil der Formenmasse in die Formeinrichtung entnommen wurde.

9. Vorrichtung nach Anspruch 8, **dadurch gekennzeichnet, dass** die Einrichtung zum Erwärmen des Sandes bei gleichzeitiger Umwälzung des Sandes durch einen Drehrohrofen (04, 06) gebildet ist.

10. Vorrichtung nach Anspruch 8 oder 9, **dadurch gekennzeichnet, dass** die Mischeinrichtung durch mehrere Durchlaufmischer (09, 13, 16) gebildet ist.
